# EUROPÄISCHE PATENTSCHRIFT

(11) **EP 3 947 994 B1**
(45) Veröffentlichungstag und Bekanntmachung des Hinweises auf die Patenterteilung: **07.12.2022**
(21) Anmeldenummer: 20709482.2
(22) Anmeldetag: 25.02.2020
(51) Int. Cl.: F16C 19/16, F16C 33/58, F16C 43/04, F16C 19/06

(54) **VERFAHREN ZUM ZUSAMMENBAU EINES KUGELLAGERS**
METHOD FOR ASSEMBLING A BALL BEARING
PROCÉDÉ D'ASSEMBLAGE DE ROULEMENT À BILLES

(30) Priorität: 25.03.2019 DE 102019107492
(43) Veröffentlichungstag der Anmeldung: 09.02.2022
(73) Patentinhaber: Schaeffler Technologies AG & Co. KG, 91074 Herzogenaurach (DE)
(72) Erfinder: HELBIG, Robert, 97493 Bergrheinfeld (DE); HOFMANN, Heinrich, 97422 Schweinfurt (DE); BOHR, Andreas-Johann, 91074 Herzogenaurach (DE); PAUSCH, Michael, 97456 Dittelbrunn (DE); EIDLOTH, Rainer, 91074 Herzogenaurach (DE)
(86) Internationale Anmeldenummer: PCT/DE2020/100131
(87) Internationale Veröffentlichungsnummer: WO 2020/192818

(56) Entgegenhaltungen:
- EP-A2- 2 042 754
- DE-C2- 19 607 024
- JP-A- 2005 009 643
- JP-A- 2009 192 049
- US-A- 1 074 228
- US-A- 1 153 066
- US-A1- 2004 234 369

## Beschreibung

### Gebiet der Erfindung

Die Erfindung betrifft ein Verfahren zum Zusammenbau eines Kugellagers, wobei das Kugellager einen Innenring, einen Außenring und einen Käfig umfasst, wobei zwischen dem Innenring und dem Außenring ein Satz Kugeln angeordnet ist, wobei die Kugeln einen Durchmesser aufweisen und wobei jeder der beiden Ringe eine im Radialschnitt kreisbogenabschnittsförmige Laufbahn zum Anlauf der Kugeln aufweist, wobei sich die Laufbahn einer der beiden Ringe auf einer der beiden Seiten des Rings im Falle eines Außenrings über einen radial höchsten oder im Falle eines Innenrings niedrigsten Punkt hinaus kreisbogenabschnittsförmig erstreckt, bis in axiale Richtung des Kugellagers ein Hinterschnitt zwischen dem Hüllkreisdurchmesser der Kugeln und dem radial niedrigsten oder höchsten Punkt der Laufbahn vorliegt, wobei der Hinterschnitt in radiale Richtung des Kugellagers mindestens 1,5 % des Durchmesser der Kugeln und höchstens 5 % des Durchmesser der Kugeln beträgt.

### Hintergrund der Erfindung

Kugellager der oben genannten Art sind im Stand der Technik hinlänglich bekannt. Eine gebräuchliche Ausführungsform sind Rillenkugellager. Bei diesen ist vorgesehen, dass die Laufbahn des Innenrings und des Außenrings die Kugel von der Lagermitte ausgehend jeweils um einen hinreichenden Umfangswinkel umfassen und es so ermöglichen, sowohl radiale als auch axiale Kräfte zu übertragen. Zum einschlägigen Stand der Technik wird auf die JP 2005 009643 A, auf die JP 2009 192049 A, auf die US 2004/234369 A1, auf die EP 2 042 754 A2, auf die US 1 153 066 A und auf die US 1 074 228 A hingewiesen. Der Oberbegriff der Ansprüche 1 und 2 wird z.B. aus JP 2005 009643 A bekannt.

Die Montage eines Rillenkugellagers erfolgt beispielsweise so, dass die Kugeln bei exzentrischer Anordnung zwischen Lagerinnenring und Lageraußenring in den Raum zwischen den Lagerringen eingelegt werden ("Exzenter-Verfahren"). Anschließend werden sie in ihre endgültige Umfangsposition verschoben und dann mittels eines Käfigs festgelegt. Diese Technologie ist beispielsweise in der US 822 723 A beschrieben.

Vorteilhaft kann auf diese Art und Weise auch eine Montage bei hohen Schultern bzw. tiefen Rillen am Innenring und Außenring erfolgen. Nachteilig allerdings ist, dass hier nur ein Füllgrad von ca. 60 % erreicht werden kann (d. h. die Kugeln zwischen dem Innenring und dem Außenring füllen nur etwa 60 % des gesamten Umfangs). Die Tragfähigkeit des Lagers ist entsprechend beschränkt. Soll ein höherer Füllgrad und somit eine höhere Tragfähigkeit des Lagers erreicht werden, können Schrägkugellager (nach DIN 628) eingesetzt werden. Einer der Lagerringe hat dabei ab dem höchsten (im Falle des Außenrings) bzw. niedrigsten (im Falle des Innenrings) Punkt der Laufbahn eine im Wesentlichen in axiale Richtung des Lagerrings auslaufende Profilierung, so dass der Lagerring auf die vormontierte Einheit, bestehend aus dem anderen Lagerring und dem Satz Kugeln, axial aufgeschoben werden kann. Dabei wird zumeist eine geringfügige Überhöhung (d. h. Erstreckung der kreisbogenabschnittsförmigen Laufbahn über den höchsten bzw. niedrigsten Punkt hinaus) an einem der Lagerringe vorgesehen, damit das Lager selbsthaltend wird. Diese Überhöhung ist allerdings mit ca. 0,5 % des Kugeldurchmessers sehr gering. Die Montage ist hierdurch nicht wesentlich beeinträchtigt.

In vorteilhafter Weise kann hierdurch ein Füllgrad von ca. 90 % erreicht werden, sodass eine höhere Tragfähigkeit des Lagers vorliegt. Nachteilig sind allerdings axiale Kräfte nur in eine axiale Lagerrichtung übertragbar. Außerdem ist auch die radiale Belastbarkeit des Lagers relativ gering, da bei entsprechender Belastung die Druckellipse zwischen Kugeln und Laufbahn leicht seitlich auswandert. Schrägkugellager arbeiten paarweise und müssen angestellt werden, um das Betriebsspiel zu erreichen.

### Aufgabe der Erfindung

Der vorliegenden Erfindung liegt die Aufgabe zugrunde, ein Kugellager der oben genannten Art in relativ einfacher Weise zusammenbauen zu können.

### Zusammenfassung der Erfindung

Erfindungsgemäß wird diese Aufgabe bei einem Verfahren zum Zusammenbau nach dem Oberbegriff des Anspruchs 1 derart gelöst, dass zunächst der eine Lagerring mit dem Satz Kugeln samt Käfig vormontiert wird und dann der mit Hinterschnitt versehene andere Lagerring durch eine rotierende und unter einem Winkel zur Achsrichtung des Kugellagers ausgerichtete Druckplatte durch Aufbringung einer in axiale Richtung des Kugellagers gerichtete Kraft auf die Einheit bestehend aus Lagerring und dem Satz Kugeln samt Käfig aufgeschoben wird.

Dieser Winkel liegt bevorzugt zwischen 0,5° und 9°.

Eine alternative Lösung sieht vor, dass zunächst der eine Lagerring mit dem Satz Kugeln samt Käfig vormontiert wird und dann der mit Hinterschnitt versehene andere Lagerring in einer Druckbüchse montiert wird, die um eine Achse gedreht wird, wobei in der Druckbüchse ein in axialer Richtung vorspringender Vorsprung angeordnet ist, der an einer Umfangsstelle auf eine axiale Seite des anderen Lagerrings drückt, wobei durch Aufbringung einer in axiale Richtung des Kugellagers gerichtete Kraft auf den anderen Lagerring mittels der rotierenden Druckbüchse dieser auf die Einheit bestehend aus Lagerring und dem Satz Kugeln samt Käfig aufgeschoben wird.

Der andere Lagerring wird dabei vorzugsweise vor seinem Aufschieben erwärmt. Dies kann beispielsweise um 200 K über Umgebungstemperatur sein.

Der Hinterschnitt in radiale Richtung des Kugellagers beträgt dabei höchstens 4 % des Durchmessers der Kugeln.

Insoweit wird die an sich bekannte Konzeption eines Schrägkugellagers dahingehend weiterentwickelt, dass die Laufbahn über den höchsten Punkt (im Falle eines Außenrings) in Richtung des einen seitlichen axialen Endbereich des Lagers fortgesetzt wird, bis sich der genannte Hinterschnitt in der definierten Größenordnung ergibt. Diese beträgt mindestens 1,5 % des Durchmessers der Kugeln.

Vorzugsweise weist der Außenring den Hinterschnitt auf.

Die Laufbahn geht nach einer Fortbildung der Erfindung im von den Kugeln entfernten Bereich in einen zylindrischen Abschnitt über. Der Durchmesser dieses zylindrischen Abschnitts ist dabei bevorzugt größer als der radial höchste (im Falle eines Außenrings) oder kleiner (im Falle eines Innenrings) als der radial niedrigste Punkt.

Die Laufbahn einer der beiden Ringe erstreckt sich vorzugsweise auf der anderen Seite des Rings über den radial höchsten (im Falle eines Außenrings) oder niedrigsten (im Falle eines Innenrings) Punkt hinaus kreisbogenabschnittsförmig und kontaktiert hier die Kugeln über einen Umfangswinkel von mindestens 20°.

Die Laufbahn am anderen Lagerring erstreckt sich vorzugsweise auf den beiden Seiten des Lagerrings über unterschiedliche Umfangswinkel der Kugeln. Für das vorgeschlagene Lager wird ein kleines radiales Lagerspiel vorgesehen, wie es auch bei Rillenkugellager üblich ist.

In vorteilhafter Weise stellt das vorgeschlagene Lager somit ein Radiallager dar, welches in eine Achsrichtung hohe axiale Kräfte übertragen kann, allerdings können in begrenztem Umfang auch in die andere Achsrichtung axiale Kräfte übertragen werden.

Das vorgeschlagene Lager kann als Festlager, als Loslager und auch als Stützlager (schwimmende Lagerung) eingesetzt werden.

Die vorgeschlagene Lagerkonzeption erinnert somit an ein Schrägkugellager, wobei allerdings ein deutlicher Hinterschnitt in axiale Richtung vorgesehen ist, so dass eine gewisse Eignung zur Übertragung von axialen Kräften in beiden Lagerrichtungen besteht. Dieser Hinterschnitt erlabt auch hohe radiale Kräfte ohne Abschneidung der Druckellipse.

Die Montage kann mit dem beschriebenen Taumelverfahren erfolgen, welches prinzipiell und als solches in der DE 196 07 024 C2 beschrieben ist, auf die insoweit ausdrücklich Bezug genommen wird. In dem beschriebenen Dokument wird es zum Einpressen eines Wälzlagers mit hohem Übermaß in ein Gehäuse eingesetzt. Hier ist der Außenring gekammert. Bei dem einen oben beschriebenen Montageverfahren ist das Lager bei der Montage radial frei.

### Kurze Beschreibung der Figuren

Eine bevorzugte Ausführungsform des Kugellagers, welches erfindungsgemäß zusammengebaut wird, wird nachfolgend unter Bezugnahme auf die beigefügten Zeichnungen näher erläutert. Dabei zeigen:
- Figur 1: den Radialschnitt durch ein Kugellager,
- Figur 2: eine vergrößerte Darstellung des Kontaktbereichs zwischen Lageraußenring und Kugeln des Lagers gemäß Figur 1,
- Figur 3: eine Vorrichtung für den Zusammenbau des Lagers gemäß Figur 1 während des Montageprozesses und
- Figur 4: eine zu Figur 3 alternativ gestaltete Vorrichtung für den Zusammenbau des Lagers gemäß Figur 1 während des Montageprozesses.

### Ausführliche Beschreibung der Figuren

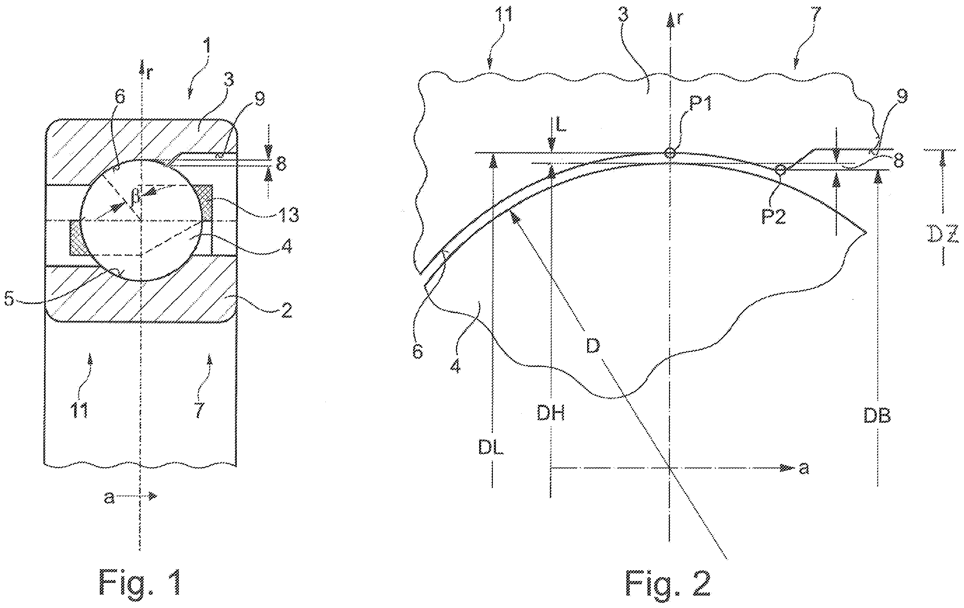

In Figur 1 ist ein Kugellager 1 zu sehen, welches einen Innenring 2 und einen Außenring 3 umfasst, zwischen denen ein Satz Kugeln 4 angeordnet ist. Diese werden von einem Käfig 13 in Position gehalten. Der Innenring 2 hat eine Laufbahn 5 für die Kugeln 4, der Außenring 3 hat eine Laufbahn 6 für die Kugeln 4.

Die Laufbahn 5 des Innenrings 2 ist dabei im Wesentlichen die klassische Laufbahn eines Rillenkugellagers, wobei hier allerdings der Auslauf der Laufbahn 5 an der Seite 7 des Rings höher gezogen ist, als der Auslauf der Laufbahn 5 an der Seite 11 des Rings. Dies ergibt sich daraus, da das Lager axiale Kräfte nur in unterschiedlicher Weise bzw. Größe in die beiden Achsrichtungen übertragen kann.

Die Laufbahn 6 des Außenrings 3 ist speziell ausgebildet und ergibt sich am besten aus Figur 2.

Hiernach ist die Laufbahn 6 im linken Bereich des Lagers, also im Bereich der Seite 11 des Rings, im Wesentlichen nach Art eines Schrägkugellagers geformt; in Figur 1 ist der Winkel β eingetragen, über den sich der Kontakt zwischen Laufbahn 5 und Kugel 4 im linken Bereich der Kugel erstreckt. Dieser Winkel β beträgt zumeist mindestens 20°.

Indes ist im rechten Bereich des Lagers, also im Bereich der Seite 7 des Rings, eine andere Ausgestaltung vorgesehen:
In Figur 2 eingetragen ist der Durchmesser D der Kugel 4. Hieraus und aus der Geometrie des Innenrings 2 ergibt sich der Hüllkreisdurchmesser DH der Kugeln 4. Der radial höchste Punkt P1 der Laufbahn 6 liegt um die Hälfte der radialen Lagerluft L oberhalb des Hüllkreisdurchmessers DH, und zwar auf dem Laufbanddurchmesser DL.

Für die Ausgestaltung der Laufbahn 6 des Außenrings 3 ist nun vorgesehen, dass sich die Laufbahn 6 des Außenrings 3 auf der Seite 7 des Rings 3 über den radial höchsten Punkt P1 hinaus kreisbogenabschnittsförmig erstreckt, und zwar bis in axiale Richtung a des Kugellagers 1 ein Hinterschnitt 8 zwischen dem Hüllkreisdurchmesser DH der Kugeln 4 und dem radial niedrigsten Punkt P2 der Laufbahn 6 vorliegt; der radial niedrigste Punkt P2 liegt auf dem Borddurchmesser DB. Für die Größe dieses Hinterschnitts 8 in radiale Richtung r des Lagers 1 ist ein Wert von mindestens 1,5 % des Durchmesser D der Kugeln 4 vorgesehen. Allerdings ist für den diesbezüglich höchsten Wert 5 % des Durchmesser D der Kugeln 4 vorgesehen.

Mit der Auswahl dieses spezifischen Bereichs ergibt sich der vorteilhafte Effekt, dass der Zusammenbau des Lagers relativ unproblematisch bleibt, das Lager allerdings im Betrieb eine verbesserte radiale Tragfähigkeit durch einen hohen Füllgrad mit Kugeln (wie bei einem Schrägkugellager) aufweist und gleichzeitig axiale Kräfte in beiden Achsrichtungen übertragbar sind.

Begünstigt wird insbesondere die Montage dadurch, dass sich im Bereich der Seite 7 des Außenrings 3 ein zylindrischer Abschnitt 9 an die Laufbahn 6 anschließt; diese weist einen Durchmesser DZ auf. Der Durchmesser DZ ist dabei bevorzugt größer als der Laufbahndurchmesser DL.

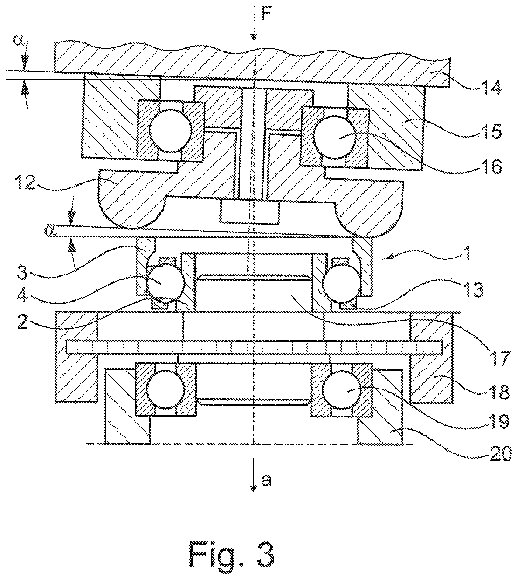

Der erfindungsgemäße Zusammenbau des Lagers ist in Figur 3 illustriert. Dort ist eine entsprechende Montagevorrichtung dargestellt, die eine Taumelscheibe 14 aufweist, die unter einem kleinen Winkel α zwischen 1° und 9° zur axialen Richtung a des zu montierenden Lagers 1 rotiert. An der Taumelscheibe 14 ist ein Stützring 15 befestigt, welcher ein Lager 16 trägt. Das Lager 16 lagert eine Druckplatte 12, die folglich gleichermaßen unter dem Winkel α angeordnet ist und frei rotieren kann.

Der Innenring 2 des zu montierenden Lagers 1 samt Satz Kugeln 4 und Käfig 13 ist auf einer Aufnahme 17 aufgenommen, die mit einer Schwungscheibe 18 verbunden ist. Die Schwungscheibe 18 ist durch ein Lager 19 gelagert, welches in einer Stützbuchse 20 angeordnet ist.

Der Zusammenbau des Lagers erfolgt, indem auf den Außenring 3 über die Druckplatte 12 eine in axiale Richtung a wirksame Kraft F aufgebracht wird, während gleichzeitig die Druckplatte 12, die Aufnahme 17 und die Schwungscheibe 18 rotieren können.

Bei dem vorgeschlagenen Verfahren zum Zusammenbau des Lagers wird also der Außenring 3 durch die winkelig angestellte Taumelscheibe 14 axial exzentrisch belastet. Der freie Außenring 3 wird dabei oval verformt. Die Druckplatte 12 wird von der sich drehenden Taumelscheibe 14 geschleppt. Gleichzeitig kann die untere Schwungscheibe 18 gedreht werden.

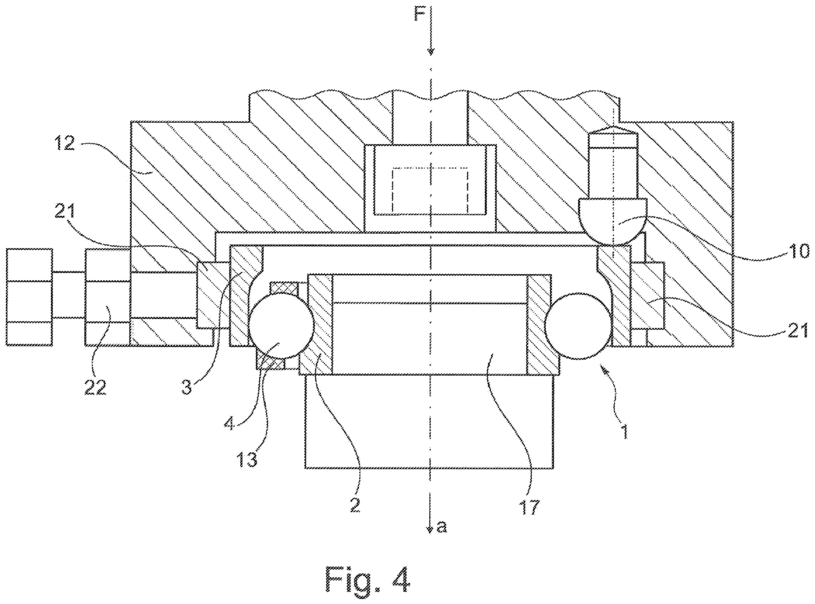

Der erfindungsgemäße Zusammenbau des Lagers gemäß einer alternativen Vorgehensweise ist in Figur 4 illustriert. Dort ist eine ähnliche Montagevorrichtung dargestellt, wie sie in Figur 3 gezeigt ist. Soweit dieselben Bezugszeichen verwendet sind, gelten dieselben Ausführungen wie im Falle von Figur 3. Der Unterschied zu dieser Lösung besteht im Falle der in Figur 4 gezeigten Vorrichtung darin, dass nun keine Taumelscheibe zum Einsatz kommt, sondern dass die Druckplatte 12 gemäß Figur 3 im Falle der Lösung gemäß Figur 4 als Druckbüchse 12 ausgebildet ist. In diese wird der Lagerring 3 montiert, indem er über einen geschlitzten Druckring 21 in der gezeigten Ausnehmung in der Druckbüchse 12 platziert wird. Mittels einer Schraube 22 kann eine Fixierung des Lagerrings 3 in der Druckbüchse 12 erfolgen.

Die Druckplatte 12 weist einen Vorsprung 10 auf, der im gezeigten Ausführungsbeispiel als Schraube mit Linsenkopf ausgebildet ist. Dieser Vorsprung 10 drückt an einer Umfangsstelle auf den Lagerring 3. Wird nun die Druckbüchse 12 um die Achse a gedreht und mit der in axiale Richtung a wirkenden Kraft F belastet, kann der Lagerring 3 auf die vormontierte Einheit bestehend aus Lagerring 2 und Kugeln 4 samt Käfig 13 axial aufgeschoben werden.

Die Belastung der Kugeln wird bei diesem Montageprozess relativ geringgehalten, was für die Lebensdauer des Lagers sehr vorteilhaft ist. Die Belastung der Kugeln kann dadurch weiter herabgesetzt werden, dass der zu montierende Außenring 3 vor der Montage erwärmt wird. Demgemäß dehnt er sich aus, so dass die Pressungen bei der Montage geringer ausfallen.

Der vorgeschlagene Montageprozess stellt sicher, dass die Montage ohne Schädigung der Wälzkörper und Laufbahnen erfolgen kann, da die axiale Montagekraft exzentrisch wirkt und der Außenring relativ zum Innenring dreht.

### Bezugszeichenliste

- 1: Kugellager
- 2: Innenring
- 3: Außenring
- 4: Kugel
- 5: Laufbahn
- 6: Laufbahn
- 7: Seite des Rings
- 8: Hinterschnitt
- 9: zylindrischer Abschnitt
- 10: Vorsprung (Schraube mit Linsenkopf)
- 11: Seite des Rings
- 12: Druckplatte / Druckbüchse
- 13: Käfig
- 14: Taumelscheibe
- 15: Stützring
- 16: Lager
- 17: Aufnahme für zu montierendes Lager
- 18: Schwungscheibe
- 19: Lager
- 20: Stützbüchse
- 21: Druckring (geschlitzt)
- 22: Schraube

- D: Durchmesser der Kugel
- DH: Hüllkreisdurchmesser der Kugeln
- DZ: Durchmesser des zylindrischen Abschnitts
- DL: Laufbahndurchmesser
- DB: Borddurchmesser
- L: Hälfte der radialen Lagerluft
- P1: radial höchster Punkt
- P2: radial niedrigster Punkt der Laufbahn
- F: Kraft

- α: Winkel der Druckplatte
- β: Umfangswinkel

- a: axiale Richtung
- r: radiale Richtung

## Patentansprüche

1. Verfahren zum Zusammenbau eines Kugellagers (1), wobei das Kugellager (1) einen Innenring (2), einen Außenring (3) und einen Käfig (13) umfasst, wobei zwischen dem Innenring (2) und dem Außenring (3) ein Satz Kugeln (4) angeordnet ist, wobei die Kugeln (4) einen Durchmesser (D) aufweisen und wobei jeder der beiden Ringe (2, 3) eine im Radialschnitt kreisbogenabschnittsförmige Laufbahn (5, 6) zum Anlauf der Kugeln (4) aufweist, wobei sich die Laufbahn (6) einer der beiden Ringe (3) auf einer der beiden Seiten (7) des Rings (3) im Falle eines Außenrings (3) über einen radial höchsten oder im Falle eines Innenrings (2) niedrigsten Punkt (P1) hinaus kreisbogenabschnittsförmig erstreckt, bis in axiale Richtung (a) des Kugellagers (1) ein Hinterschnitt (8) zwischen dem Hüllkreisdurchmesser (DH) der Kugeln (4) und dem radial niedrigsten oder höchsten Punkt (P2) der Laufbahn (6) vorliegt, wobei der Hinterschnitt (8) in radiale Richtung (r) des Kugellagers (1) mindestens 1,5 % des Durchmesser (D) der Kugeln (4) und höchstens 5 % des Durchmesser (D) der Kugeln (4) beträgt,
**dadurch gekennzeichnet,**
**dass** zunächst der eine Lagerring (2) mit dem Satz Kugeln (4) samt Käfig (13) vormontiert wird und dann der mit Hinterschnitt (8) versehene andere Lagerring (3) durch eine rotierende und unter einem Winkel (a) zur Achsrichtung (a) des Kugellagers (1) ausgerichtete Druckplatte (12) durch Aufbringung einer in axiale Richtung (a) des Kugellagers (1) gerichtete Kraft (F) auf die Einheit bestehend aus Lagerring (2) und dem Satz Kugeln (4) samt Käfig (13) aufgeschoben wird.

2. Verfahren zum Zusammenbau eines Kugellagers (1), wobei das Kugellager (1) einen Innenring (2), einen Außenring (3) und einen Käfig (13) umfasst, wobei zwischen dem Innenring (2) und dem Außenring (3) ein Satz Kugeln (4) angeordnet ist, wobei die Kugeln (4) einen Durchmesser (D) aufweisen und wobei jeder der beiden Ringe (2, 3) eine im Radialschnitt kreisbogenabschnittsförmige Laufbahn (5, 6) zum Anlauf der Kugeln (4) aufweist, wobei sich die Laufbahn (6) einer der beiden Ringe (3) auf einer der beiden Seiten (7) des Rings (3) im Falle eines Außenrings (3) über einen radial höchsten oder im Falle eines Innenrings (2) niedrigsten Punkt (P1) hinaus kreisbogenabschnittsförmig erstreckt, bis in axiale Richtung (a) des Kugellagers (1) ein Hinterschnitt (8) zwischen dem Hüllkreisdurchmesser (DH) der Kugeln (4) und dem radial niedrigsten oder höchsten Punkt (P2) der Laufbahn (6) vorliegt, wobei der Hinterschnitt (8) in radiale Richtung (r) des Kugellagers (1) mindestens 1,5 % des Durchmesser (D) der Kugeln (4) und höchstens 5 % des Durchmesser (D) der Kugeln (4) beträgt,
**dadurch gekennzeichnet,**
**dass** zunächst der eine Lagerring (2) mit dem Satz Kugeln (4) samt Käfig (13) vormontiert wird und dann der mit Hinterschnitt (8) versehene andere Lagerring (3) in einer Druckbüchse (12) montiert wird, die um eine Achse (a) gedreht wird, wobei in der Druckbüchse (12) ein in axialer Richtung (a) vorspringender Vorsprung (10) angeordnet ist, der an einer Umfangsstelle auf eine axiale Seite des anderen Lagerrings (3) drückt, wobei durch Aufbringung einer in axiale Richtung (a) des Kugellagers (1) gerichtete Kraft (F) auf den anderen Lagerring (3) mittels der rotierenden Druckbüchse (12) dieser auf die Einheit bestehend aus Lagerring (2) und dem Satz Kugeln (4) samt Käfig (13) aufgeschoben wird.

3. Verfahren nach Anspruch 1 oder 2, **dadurch gekennzeichnet, dass** der andere Lagerring (3) vor seinem Aufschieben erwärmt wird.

4. Verfahren nach einem der Ansprüche 1 bis 3, **dadurch gekennzeichnet, dass** der Hinterschnitt (8) in radiale Richtung (r) des Kugellagers (1) höchstens 4 % des Durchmessers (D) der Kugeln (4) beträgt.

5. Verfahren nach einem der Ansprüche 1 bis 4, **dadurch gekennzeichnet, dass** der Außenring (3) den Hinterschnitt (8) aufweist.

6. Verfahren nach einem der Ansprüche 1 bis 5, **dadurch gekennzeichnet, dass** die Laufbahn (6) im von den Kugeln (4) entfernten Bereich in einen zylindrischen Abschnitt (9) übergeht.

7. Verfahren nach einem der Ansprüche 1 bis 6, **dadurch gekennzeichnet, dass** der Durchmesser (DZ) des zylindrischen Abschnitts (9) größer als der radial höchste oder kleiner als der radial niedrigste Punkt (P1) ist.

8. Verfahren nach einem der Ansprüche 1 bis 7, **dadurch gekennzeichnet, dass** sich die Laufbahn (6) einer der beiden Ringe (3) auf der anderen Seite (11) des Rings über den radial höchsten oder niedrigsten Punkt (P1) hinaus kreisbogenabschnittsförmig erstreckt und hier die Kugeln (4) über einen Umfangswinkel (β) von mindestens 20° kontaktiert.

9. Verfahren nach einem der Ansprüche 1 bis 8, **dadurch gekennzeichnet, dass** sich die Laufbahn (5) am anderen Lagerring (2) auf den beiden Seiten des Lagerrings (2) über unterschiedliche Umfangswinkel der Kugeln (4) erstreckt.

## Claims

1. A method for assembling a ball bearing (1), wherein the ball bearing (1) comprises an inner ring (2), an outer ring (3) and a cage (13), wherein a set of balls (4) is arranged between the inner ring (2) and the outer ring (3), wherein the balls (4) have a diameter (D) and wherein each of the two rings (2, 3) has a raceway (5, 6) in a circular arc section shape in the radial section for the balls (4) to run against, wherein the raceway (6) of one of the two rings (3) extends in circular arc section shape on one of the two sides (7) of the ring (3) beyond a radially highest point in the case of an outer ring (3) or a radially lowest point (P1) in the case of an inner ring (2) until in the axial direction (a) of the ball bearing (1) there is an undercut (8) between the boundary circle diameter (DH) of the balls (4) and the radially lowest or highest point (P2) of the raceway (6), wherein the undercut (8) in the radial direction (r) of the ball bearing (1) corresponds to at least 1.5% of the diameter (D) of the balls (4) and at most 5% of the diameter (D) of the balls (4),
**characterised in that**
first, the one bearing ring (2) with the set of balls (4) is preassembled together with the cage (13) and then the other bearing ring (3) provided with the undercut (8) is pressed by a rotating pressure plate (12) aligned at an angle (a) to the axial direction (a) of the ball bearing (1) by applying a force (F) directed in the axial direction (a) of the ball bearing (1) onto the unit consisting of the bearing ring (2) and the set of balls (4) together with the cage (13).

2. The method for assembling a ball bearing (1), wherein the ball bearing (1) comprises an inner ring (2), an outer ring (3) and a cage (13), wherein a set of balls (4) is arranged between the inner ring (2) and the outer ring (3), wherein the balls (4) have a diameter (D) and wherein each of the two rings (2, 3) has a raceway (5, 6) in a circular arc section shape in the radial section for the balls (4) to run against, wherein the raceway (6) of one of the two rings (3) extends in circular arc section shape on one of the two sides (7) of the ring (3) beyond a radially highest point in the case of an outer ring (3) or a radially lowest point (P1) in the case of an inner ring (2) until in the axial direction (a) of the ball bearing (1) there is an undercut (8) between the boundary circle diameter (DH) of the balls (4) and the radially lowest or highest point (P2) of the raceway (6), wherein the undercut (8) in the radial direction (r) of the ball bearing (1) corresponds to at least 1.5% of the diameter (D) of the balls (4) and at most 5% of the diameter (D) of the balls (4),
**characterised in that**
first, the one bearing ring (2) with the set of balls (4) is preassembled together with the cage (13) and then the other bearing ring (3) provided with the undercut (8) is mounted in a pressure sleeve (12), which is rotated about an axis (a), wherein a projection (10) projecting in the axial direction (a) is arranged in the pressure sleeve (12), which presses at a circumferential point onto an axial side of the other bearing ring (3), wherein by applying a force (F) directed in the axial direction (a) of the ball bearing (1) on the other bearing ring (3) by means of the rotating pressure sleeve (12), the bearing ring is pushed onto the unit consisting of the bearing ring (2) and the set of balls (4) together with the cage (13).

3. The method according to claim 1 or 2, **characterised in that** the other bearing ring (3) is heated before it is pushed on.

4. The method according to any one of claims 1 to 3, **characterised in that** the undercut (8) in the radial direction (r) of the ball bearing (1) corresponds to at most 4% of the diameter (D) of the balls (4).

5. The method according to any one of claims 1 to 4, **characterised in that** the outer ring (3) has the undercut (8).

6. The method according to any one of claims 1 to 5, **characterised in that** the raceway (6) merges into a cylindrical section (9) in the section remote from the balls (4).

7. The method according to any one of claims 1 to 6, **characterised in that** the diameter (DZ) of the cylindrical section (9) is larger than the radially highest point or smaller than the radially lowest point (P1).

8. The method according to any one of claims 1 to 7, **characterised in that** the raceway (6) of one of the two rings (3) extends on the other side (11) of the ring beyond the radially highest or lowest point (P1) in a circular arc section shape and here contacts the balls (4) over a circumferential angle (β) of at least 20°.

9. The method according to any one of claims 1 to 8, **characterised in that** the raceway (5) on the other bearing ring (2) extends on the two sides of the bearing ring (2) over different circumferential angles of the balls (4).

## Revendications

1. Procédé d'assemblage d'un roulement à billes (1), le roulement à billes (1) comprenant une bague intérieure (2), une bague extérieure (3) et une cage (13), un jeu de billes (4) étant disposé entre la bague intérieure (2) et la bague extérieure (3), les billes (4) présentant un diamètre (D) et chacune des deux bagues (2, 3) présentant un chemin de roulement (5, 6) en forme de section en arc de cercle en coupe radiale pour l'avancement des billes (4), le chemin de roulement (6) d'une des deux bagues (3) s'étendant en forme de section en arc de cercle sur un des deux côtés (7) de la bague (3) dans le cas d'une bague extérieure (3) au-delà d'un point radialement le plus haut ou dans le cas d'une bague intérieure (2) au-delà d'un point le plus bas (P1) jusqu'à ce que, en direction axiale (a) du roulement à billes (1), soit présente une contre-dépouille (8) entre le diamètre du cercle inscrit (DH) des billes (4) et le point radialement le plus bas ou le plus haut (P2) du chemin de roulement (6), la contre-dépouille (8) étant dans la direction radiale (r) du roulement à billes (1) au moins 1,5 % du diamètre (D) des billes (4) et au plus 5 % du diamètre (D) des billes (4),
**caractérisé en ce**
**que** d'abord l'une des bagues de roulement (2) est pré-montée avec le jeu de billes (4) y compris la cage (13) et ensuite l'autre bague de roulement (3) munie de la contre-dépouille (8) est emmanchée par un plateau de pression aligné (12) rotatif et à un angle (a) par rapport à la direction axiale (a) du roulement à billes (1) par application d'une force (F) dirigée dans la direction axiale (a) du roulement à billes (1) à l'ensemble constitué de la bague de roulement (2) et du jeu de billes (4) y compris la cage (13).

2. Procédé d'assemblage d'un roulement à billes (1), le roulement à billes (1) comprenant une bague intérieure (2), une bague extérieure (3) et une cage (13), un jeu de billes (4) étant disposé entre la bague intérieure (2) et la bague extérieure (3), les billes (4) présentant un diamètre (D) et chacune des deux bagues (2, 3) présentant un chemin de roulement (5, 6) en forme de section en arc de cercle en coupe radiale pour l'avancement des billes (4), le chemin de roulement (6) d'une des deux bagues (3) s'étendant en forme de section en arc de cercle sur un des deux côtés (7) de la bague (3) dans le cas d'une bague extérieure (3) au-delà d'un point radialement le plus haut ou dans le cas d'une bague intérieure (2) au-delà d'un point le plus bas (P1) jusqu'à ce que, en direction axiale (a) du roulement à billes (1), soit présente une contre-dépouille (8) entre le diamètre du cercle inscrit (DH) des billes (4) et le point radialement le plus bas ou le plus haut (P2) du chemin de roulement (6), la contre-dépouille (8) étant dans la direction radiale (r) du roulement à billes (1) au moins 1,5 % du diamètre (D) des billes (4) et au plus 5 % du diamètre (D) des billes (4),
**caractérisé en ce**
**que** d'abord l'une des bagues de roulement (2) est pré-montée avec le jeu de billes (4) y compris la cage (13) et ensuite l'autre bague de roulement (3) munie de la contre-dépouille (8) est montée dans un manchon de pression (12) qui tourne autour d'un axe (a), une saillie (10) faisant saillie dans la direction axiale (a) étant ménagée dans le manchon de pression (12) et appuyant en un point circonférentiel sur un côté axial de l'autre bague de roulement (3), par application d'une force (F) dirigée dans la direction axiale (a) du roulement à billes (1) sur l'autre bague de roulement (3) au moyen du manchon de pression rotatif (12), celle-ci est emmanchée sur l'ensemble constitué de la bague de roulement (2) et du jeu de billes (4) y compris la cage (13).

3. Procédé selon la revendication 1 ou 2, **caractérisé en ce que** l'autre bague de roulement (3) est chauffée avant d'être emmanchée.

4. Procédé selon l'une quelconque des revendications 1 à 3, **caractérisé en ce que** la contre-dépouille (8) dans la direction radiale (r) du roulement à billes (1) est au plus 4 % du diamètre (D) des billes (4).

5. Procédé selon l'une quelconque des revendications 1 à 4, **caractérisé en ce que** la bague extérieure (3) présente la contre-dépouille (8).

6. Procédé selon l'une quelconque des revendications 1 à 5, **caractérisé en ce que** le chemin de roulement (6) se prolonge en une section cylindrique (9) dans la zone éloignée des billes (4).

7. Procédé selon l'une quelconque des revendications 1 à 6, **caractérisé en ce que** le diamètre (DZ) de la section cylindrique (9) est supérieur au point radialement le plus haut ou est inférieur au point radialement le plus bas (P1).

8. Procédé selon l'une quelconque des revendications 1 à 7, **caractérisé en ce que** le chemin de roulement (6) de l'une des deux bagues (3) s'étend en forme de section en arc de cercle au-delà du point radialement le plus haut ou le plus bas (P1) sur l'autre côté (11) de la bague et entre en contact ici avec les billes (4) sur un angle circonférentiel (β) d'au moins 20°.

9. Procédé selon l'une quelconque des revendications 1 à 8, **caractérisé en ce que** le chemin de roulement (5) sur l'autre bague de roulement (2) s'étend sur des angles circonférentiels différents des billes (4) des deux côtés de la bague de roulement (2).
